# EUROPEAN PATENT APPLICATION

(11) **EP 1 331 583 A1**
(43) Date of publication of application: **30.07.2003**
(21) Application number: 01963563.0
(22) Date of filing: 10.09.2001
(51) Int. Cl.: G06F 17/60

(54) **ACCOUNT TRANSACTION NOTIFYING SYSTEM**

(30) Priority: 20.09.2000 JP 2000284498
(71) Applicant: Skinner, James Jay, Tokyo 104-0051 (JP)
(72) Inventor: Skinner, James Jay, Tokyo 104-0051 (JP)
(74) Representative: Kirschner, Klaus Dieter, Dipl.-Phys.
(86) International application number: JP0107843
(87) International publication number: WO02025521

(57) **Abstract**

An account transaction notification system according to the present invention comprises an account information storage means 114 for storing information about a balance and a transaction, an account information changing means 116 for changing storage contents of the account information storage means 114 so as to corresponds to a change in account information caused by a transaction which changes the account information, an account information change detecting means 118 for detecting the change in the account information, a transaction information preparing means 120 for preparing the information about the transaction, and a transaction information transmitting means 122 for electronically and automatically transmit the information about the transaction to a terminal device for a customer.

## Description

### FIELD OF THE INVENTION

The present invention relates to a system for notifying information about a transaction in a financial account in a financial institution or the like. In more specific terms, the present invention relates to a system for notifying information about a transaction, such as information about the occurrence of a transaction and/or information about the contents of a transaction, when a transaction occurs, which changes the account information, such as deposits, withdrawals, or transfer or remittance of funds in the financial institution or the like.

### BACKGROUND OF THE INVENTION

The automatic cash transaction device disclosed in Japanese Patent Laid-open Publication No. H8-36665 is configured such that a history request means is used to request a host computer to provide information about account transactions executed after a mark set location in a user information file, an information notification is written in an information area to be compiled, and an output means is used to provide display.

In this cash transaction device, a user can check the details of increases/decreases in the account without making a balance inquiry or a registration into a bankbook.

The automatic cash transaction device disclosed in Japanese Patent Laid-open Publication No. H10-105783 is configured such that a destination of transfer is specified by an the Internet ID or the like, it is transmitted to a financial institution associated with the destination of transfer, and then the financial institution associated with the destination of transfer confirms the account name of the destination of transfer based on the ID and processes the transfer.

This automatic cash transaction device can simplify the entry operation of information about the destination of transfer.

Recently, banking systems, such as telephone banking systems, internet bunking systems or the like have been developed, in which a user can check his/her latest account balance when needed by using the phone, internet, and the like.

In the conventional automatic cash transaction device, however, even if a transaction which changes the user's account information such as deposits, withdrawals, or transfer or remittance of funds has been executed by the financial institution or the like, the user can not know his/her latest account balance at that time unless the user comes to that financial institution or a location where a terminal device of that financial institution is installed and makes a balance inquiry to check his/her account balance.

Further, in the conventional automatic cash transaction device, when the user makes a balance inquiry to check his/her account balance, a paper medium such as a bankbook, an account statement or the like is required.

Still further, in the conventional automatic cash transaction device, even if the user makes balance inquiry to check his/her account balance, he/she can only know predetermined information about the transaction which changed the account information, such as the date of the transaction, the kind of the transaction (e.g., deposit, withdrawal), the other party of the transaction, the amount of the transaction and the like.

Still further, in the conventional automatic cash transaction device, even if the user makes a balance inquiry to check his/her account balance, he/she can know the information about the transaction only in the order that the transactions occurred with respect to the transactions which change the account information.

In addition, in the telephone banking system or the like, the user is required to make an inquiry about his/her account in order to check his/her balance of account each time it is necessary by using the phone or the like. Also in the internet banking system or the like, the user is required to access his/her account in order to check his/her balance of account each time it is necessary by using the internet or the like.

Accordingly, the present invention is made to solve the problems described above and the object thereof is to provide a system which can electronically and automatically notify a customer (user) of the information about the contents of transaction when a transaction which changes the account information, such as a deposition, withdrawal, or transfer or remittance of funds occurs.

Another object of the present invention is to provide a system which can notify a customer of the information about the contents of transaction without using any paper medium such as a bankbook, an account statement or the like.

Further, still another object of the present invention is to provide a system which can notify a customer of detailed information about the contents of transaction when a transaction which changes the account information, such as a deposit, withdrawal, or transfer or remittance of funds occurs.

Still further, another object of the present invention is to provide a system in which a user can automatically know his/her account balance or the like without making an inquiry about his/her account by phone and/or without accessing his/her account by using the Internet.

### DISCLOSURE OF THE INVENTION

According to an aspect of the present invention, there is provided a system for notifying information about a transaction in a financial account in a financial institution, said system characterized by comprising an account information storage means for storing information about the account balance and/or information about a transaction, an account information changing means for changing the storage contents of the account information stored in said account information storage means so as to correspond with a change in the account information caused by a transaction which changes the account information, such as a deposit, withdrawal, or transfer or remittance of funds, an account information change detecting means for detecting a change in the account information when said account information changing means operates to change the account information, a transaction information preparing means for preparing information about an occurrence of the transaction when said account information change detecting means detects a change in the account information, and a transaction information transmitting means for electronically and automatically transmitting said information about the occurrence of the transaction prepared by said transaction information preparing means to a terminal device for the customer.

With the system having the configuration described above, when a transaction which changes the account information, such as a deposit, withdrawal, or transfer or remittance of funds occurs, the occurrence of the transaction can be electronically and automatically notified to the customer.

According to another aspect of the present invention, there is provided a system for notifying information about a transaction in a financial account in a financial institution, said system characterized by comprising an account information storage means for storing information about a balance and/or information about a transaction, an account information changing means for changing the storage contents of the account information stored in said account information storage means so as to correspond with a change in the account information caused by a transaction which changes the account information, such as a deposit, withdrawal, or transfer or remittance of funds, an account information change detecting means for detecting a change in the account information when said account information changing means operates to change the account information, a transaction information preparing means for preparing information about the transaction contents, such as the transaction amount or the account balance after the transaction when said account information change detecting means detects the change in the account information, and a transaction information transmitting means for electronically and automatically transmitting said information about the transaction contents prepared by said transaction information preparing means to a terminal device for the customer.

With the system having a configuration described above, when a transaction which changes the account information, such as a deposit, withdrawal, or transfer or remittance of funds occurs, detailed information about the transaction contents can be notified to the customer.

An embodiment of the system according to the present invention preferably may further comprise a transaction information receiving means for electronically receiving said information about the occurrence of the transaction and/or said information about the transaction contents transmitted from said transaction information transmitting means, and a transaction information outputting means for outputting said information about the occurrence of the transaction and/or said information about the transaction contents received by said transaction information receiving means.

In an alternative embodiment of the system according to the present invention, preferably said transaction information receiving means may comprise a portable telephone set or other digital radio communication device.

In an alternative embodiment of the system according to the present invention, preferably said transaction information outputting means may comprise a personal computer.

With the system having a configuration described above, the information about the transaction contents can be notified to the customer without using any paper medium, such as a bankbook or an account statement.

Further, an alternative embodiment of the system according to the present invention preferably may further comprise a transaction contents storage means for storing information about transaction contents in the past.

With the system having the configuration described above, the information about the transaction contents in the past can be provided to the customer in response to his/her request.

In an alternative embodiment of the system according to the present invention, preferably said information about the occurrence of the transaction and/or said information about the transaction contents may be transmitted by e-mail.

In still another alternative embodiment of the system according to the present invention, preferably said transaction information transmitting means may comprise a telephone set or a television set provided with two-way communication ability (hereafter referred to as "two-way television set").

Further, an alternative embodiment of the system according to the present invention preferably may further comprise an information transmission control means which can set a threshold for information about transaction contents to be transmitted and functions based on said threshold for controlling transmission of said information about the transaction contents.

Further, an alternative embodiment of the system according to the present invention preferably may further comprise an information selecting and inputting means for allowing said transaction information transmitting means to select information to be transmitted, and a transmitted information storage means for storing said input of information to be transmitted, wherein said transaction information preparing means prepares information to be transmitted based on contents of said input of information to be transmitted.

Further, in an alternative embodiment of the system according to the present invention, preferably said account information change detecting means may detect the changes in the account balance.

### BRIEF DESCRIPTION OF THE ATTACHED DRAWINGS

Fig. 1 is a block diagram illustrating a conceptual configuration of a first embodiment of the account transaction notification system according to the present invention;
Fig. 2 is an overview illustrating a specific configuration of the first embodiment of the account transaction notification system according to the present invention;
Fig. 3 is an overview illustrating a specific configuration of a second embodiment of the account transaction notification system according to the present invention;
Fig. 4 is an overview illustrating a specific configuration of a third embodiment of the account transaction notification system according to the present invention;
Fig. 5 is an overview illustrating a specific configuration of a fourth embodiment of the account transaction notification system according to the present invention;
Fig. 6 is a block diagram illustrating a conceptual configuration of a fifth embodiment of the account transaction notification system according to the present invention; and
Fig. 7 is a block diagram illustrating a conceptual configuration of a sixth embodiment of the account transaction notification system according to the present invention.

### PREFERRED EMBODIMENT OF THE INVENTION

Preferred embodiments of the present invention will now be described with reference to the attached drawings.

### (1) A first embodiment of the account transaction notification system according to the present invention

### (1.1) A configuration of the first embodiment of the account transaction notification system according to the present invention

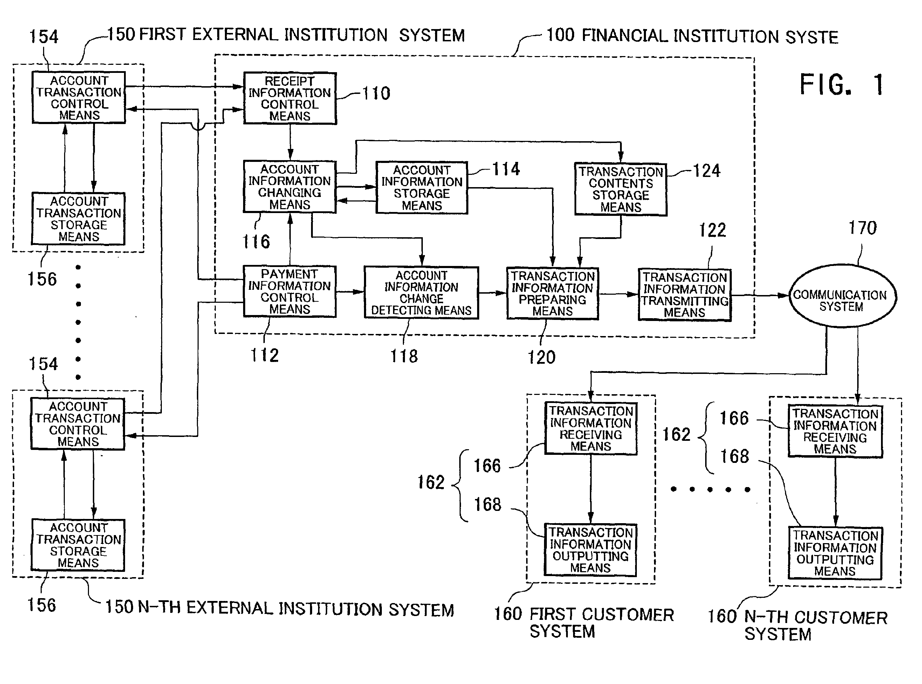

Referring to Fig. 1, in the first embodiment of the account transaction notification system according to the present invention, a financial institution has financial institution system 100 for managing an account transaction. The financial institution system 100 comprises a receipt information control means 110, a payment information control means 112, an account information storage means 114, an account information changing means 116, an account information change detecting means 118, a transaction information preparing means 120, a transaction information transmitting means 122, and a transaction contents storage means 124. The financial institution system 100 may include a bank, a credit company, a cooperative society, a pension public corporation, a post office, a stock company or the like.

An external institution comprises a first external institution, a second external institution, a third external institution, ..., an N-th external institution and the like. Each external institution has an external institution system 150 for managing a transaction with a financial institution. The external institution includes an individual, a party, a juridical person and the like, and more specifically, includes, for example, a bank, a credit company, a cooperative society, a pension public corporation, a post office, a stock company, a tax office, a sales company, a leasing company or the like. To simplify the illustration, Fig. 1 shows only the first external institution system and the N-th external institution system among them.

The financial institution system 100 can execute a transaction such as a deposit, withdrawal, or transfer or remittance of funds with a plurality of external institution systems 150.

Each external institution system 150 comprises an account transaction control means 154 and an account transaction storage means 156. The account transaction control means 154 controls the operation of transaction such as a deposit, withdrawal, or transfer or remittance of funds executed by the financial institution system 100 via the external institution system 150. The account transaction storage means 156 stores the transaction contents executed through the operation of the account transaction control means 154.

The financial institution has a plurality of customers. The plurality of customers comprises a first customer, a second customer, a third customer,..., an N-th customer and the like. The customer may comprise an individual, a party, a juridical person or the like. Each customer has own financial account in the financial institution system 100. Each customer has a customer system 160 for managing a transaction with the financial institution. The customer system160 has a terminal device 162. To simplify the illustration, Fig. 1 shows only the first customer system and the N-th customer system among them.

The receipt information control means 110 is configured such that when a receipt procedure, such as a deposit from the external institution system 150 or a transfer from the external institution system 150 occurs, the transaction contents thereof may be output to the account information changing means 116 as receipt information.

The payment information control means 112 is configured such that when a payment procedure such as a withdrawal by the external institution system 150 or a remittance to the external institution system 150 is taken, the transaction contents thereof may be output to the account information changing means 116 and the external institution system 150 as a payment information.

The account information storage means 114 can store the information about the account balance as well as the transactions of the financial account kept in the financial institution system 100.

The account information changing means 116 is configured such that it can change the storage contents of the account information stored in the account information storage means 114 so as to correspond with the change in the account information caused by the transaction which changes the account information about the financial account kept in the financial institution system 100 such as a deposit by the external institution system 150, a withdrawal by the external institution system 150, a transfer from the external institution system 150 or a remittance to the external institution system 150.

The account information change detecting means 118 is configured such that it may detect a change in the account information when the account information changing means 116 operates to change the account information.

The transaction information preparing means 120 is configured such that it may prepare the information about an occurrence of the transaction when the account information change detecting means 118 detects a change in the account information.

The transaction information transmitting means 122 is configured such that it may electronically and automatically transmit the information about the occurrence of the transaction prepared by the transaction information preparing means 120 to the terminal device 162 of the customer system 160.

In an alternative embodiment, the transaction information preparing means 120 may be configured such that it can prepare the information about the transaction contents, such as the transaction amount and balance after the transaction, together with or instead of the information about the occurrence of the transaction when the account information change detecting means 118 detects a change in the account information, and the transaction information transmitting means 122 may be configured such that it can electronically and automatically transmit the information about the occurrence of the transaction and/ or the information about the transaction contents, such as the transaction amount and balance after the transaction prepared by the transaction information preparing means 120, to the terminal device 162 of the customer system 160.

In still alternative embodiment, if necessary, the financial institution system 100 may further comprise transaction contents storage means 124 for storing information about transaction contents in the past. In the financial institution system 100 with this configuration, the transaction information preparing means 120 is configured such that it may prepare the information about the transaction, that is, the information about the occurrence of the transaction and/or the information about the transaction contents and/or the information about the transaction contents in the past, and the transaction information transmitting means 122 is configured such that it may electronically and automatically transmit the information about the transaction contents, such as the transaction amount and the balance after the transaction prepared by the transaction information preparing means 120 to the terminal device 162 of the customer system 160.

Generally, a communication system 170 is provided to transmit various kinds of information including voice information, a picture information, and character information. Herein, the communication system 170 has a concept including a wire telephone system, a wireless telephone system, a portable telephone system, a network system such as the Internet, a wireless television system, a wire television system, a two-way television system, an ISDN, a LAN, an optical fiber network system and the like.

Each terminal device 162 of the customer system 160 comprises a transaction information receiving means 166 for electronically receiving the information about the occurrence of the transaction and/or the information about the transaction contents from the transaction information transmitting means 122 via the communication system 170, and a transaction information outputting means 168 for outputting the information about the transaction received by the transaction information receiving means 166. Thus, the information about the transaction is transmitted electronically and automatically from the transaction information transmitting means 122 to the terminal device 162 of the customer system 160 via the communication system 170.

In an alternative embodiment, if necessary, the terminal device 162 of each customer system 160 may further comprises a transaction contents storage means for the customer system (though not shown) for storing the information about the transaction contents in the past. In the system with this configuration, the information about the transaction is transmitted from the transaction information transmitting means 122 to the terminal device 162 of the customer system 160 via the communication system 170, so that the thusly transmitted information about the transaction contents in the past may be stored in the transaction contents storage means of the customer system.

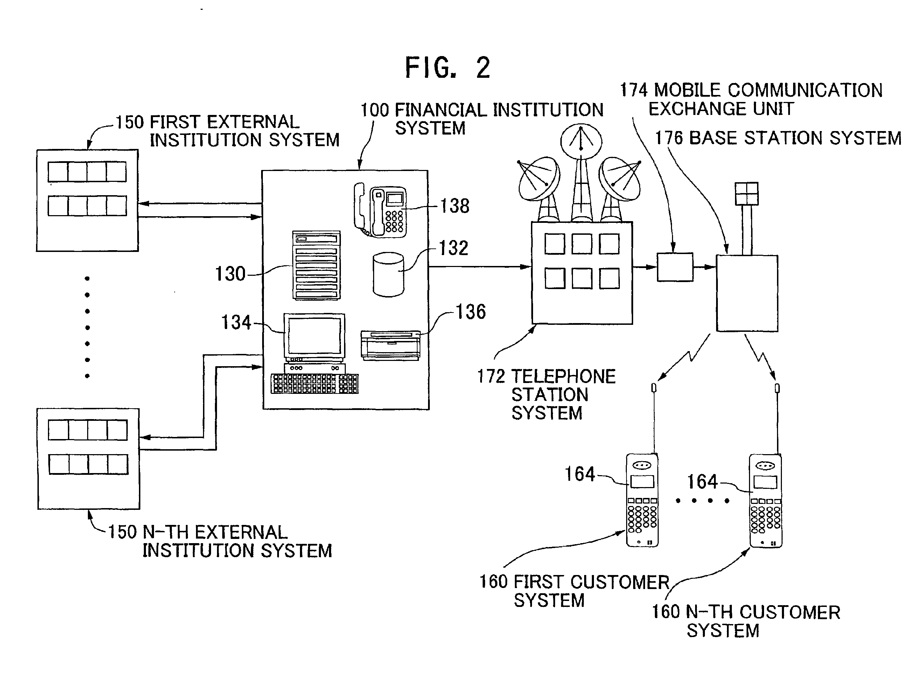

Referring now to Fig. 2, in the first embodiment of the account transaction notification system according to the present invention, each external institution system 150 comprises a computer, a storage unit, an input unit, an output unit, a terminal unit and the like (each of which is not shown) .

The financial institution system 100 comprises a computer 130, a storage unit 132, a terminal unit 134, an output unit 136, a telephone set 138. For example, the storage unit 132 may be made up either of a magnetic disk, a magnetic tape or an optical disk, or an adequate combination thereof. The terminal unit 134 may be made up of, for example, a personal computer, a key board, a card reader and the like. The output unit 136 may be made up of, for example, a printer, a display unit or the like. The telephone set 138 may be made up either of a normal wire telephone set, a portable telephone set, a digital portable telephone set or the like.

In the system with this configuration, preferably, each of the receipt information control means 110, the payment information control means 112, the account information changing means 116, the account information change detecting means 118, the transaction information preparing means 120 and the transaction information transmitting means 122 should be incorporated in the computer 130 as computer software. That is, preferably, each of the receipt information control means 110, the payment information control means 112, the account information changing means 116, the account information change detecting means 118, the transaction information preparing means 120 and the transaction information transmitting means 122 should be formed into a program of an operation contents and an operation procedure, which in turn should be installed on the computer 130. The account information storage means 114 and the transaction contents storage means 124 are preferably provided in the storage unit 132.

The financial institution system 100 and each external institution system 150 are configured such that thy may deliver the information about the transaction, such as deposit, withdrawal, or transfer or remittance of funds therebetween via the wire communication system or the wireless communication system. For example, preferably the financial institution system 100 and each external institution system 150 should be connected via either a LAN, ISDN or an optical fiber network system or the adequate combination thereof.

Referring again to Fig. 2, when the transaction information transmitting means 122 is made up of a wire telephone set or a wireless telephone set, the communication system 170 includes a telephone station system 172 such as a telephone exchange unit, a mobile communication exchange unit 174, a base station system 176 such as a telephone exchange unit and the like.

The terminal device 162 of each customer system 160 is made up of a portable telephone set 164 or other digital wireless communication system (e.g., digital portable telephone set, digital portable wireless communication unit). The transaction information outputting means 168 is made up of a display section arranged on the portable telephone set 164, a speaker arranged in the portable telephone set 164, a buzzer (including a noise exciter type and a vibrator type buzzer) arranged in the portable telephone set 164, a printer connected to the portable telephone set 164 as an external device, or the like.

### (1.2) An operation of the first embodiment of the account transaction notification system according to the present invention

Referring to Figs. 1 and 2, in the first embodiment of the account transaction notification system according to the present invention, when a receipt procedure such as a deposit from the external institution system 150 or a transfer from the external institution system 150 occurs, the receipt information control means 110 outputs the transaction contents thereof to the account information changing means 116 as a receipt information. On the other hand, when a payment procedure such as a withdrawal by the external institution system 150 or a remittance to the external institution system 150 is taken, the payment information control means 112 outputs the transaction contents thereof to the account information changing means 116 and the external institution system 150 as a payment information.

The account information storage means 114 has stored the information about a balance as well as the information about transactions of the financial account kept in the financial institution system 100. The account information changing means 116 changes the storage contents of the account information stored in the account information storage means 114 so as to correspond to the change in the account information caused by the transaction which changes the account information about the financial account of the financial institution system 100. The account information change detecting means 118 detects the change in the account information when the account information changes. The transaction information preparing means 120 prepares the information about the transaction, such as the information about an occurrence of the transaction and/or the information about transaction contents when the account information change detecting means 118 detects the change in the account information.

The transaction information transmitting means 122 electrically and automatically transmits the information about the transaction prepared by the transaction information preparing means 120 to the portable telephone set 164 of the customer 160. The portable telephone set 164 electronically receives the information about the transaction from the transaction information transmitting means 122 and displays the received information about the transaction on the display section of the portable telephone set 164.

In an alternative embodiment, the portable telephone set 164 may be configured such that upon receiving the information about the transaction, the portable telephone set 164 may notify the customer of the reception of the information about the transaction by the speaker or the buzzer.

In still another alternative embodiment, if necessary, the transaction information preparing means 120 may prepare the information about an occurrence of the transaction and/or the information about transaction contents and/or the information about transaction contents in the past, and in this case, the transaction information transmitting means 122 may electronically and automatically transmit the information about the transaction including the information about the transaction contents in the past prepared by the transaction information preparing means 120 to the terminal device 162 of the customer system 160. In the system with this configuration, the information about the transaction contents in the past can be provided to the customer when needed.

### (2) A second embodiment of the account transaction notification system according to the present invention

Then, the second embodiment of the account transaction notification system according to the present invention will be described.

The description below is mainly directed to the points where thea configuration and operation of the second embodiment of the account transaction notification system according to the present invention are different from those of the first embodiment of the account transaction notification system according to the present invention. Accordingly, as to the portions not included in the description below, the corresponding descriptions in those of the first embodiment of the account transaction notification system according to the present invention, which have been mentioned above, should be referred to.

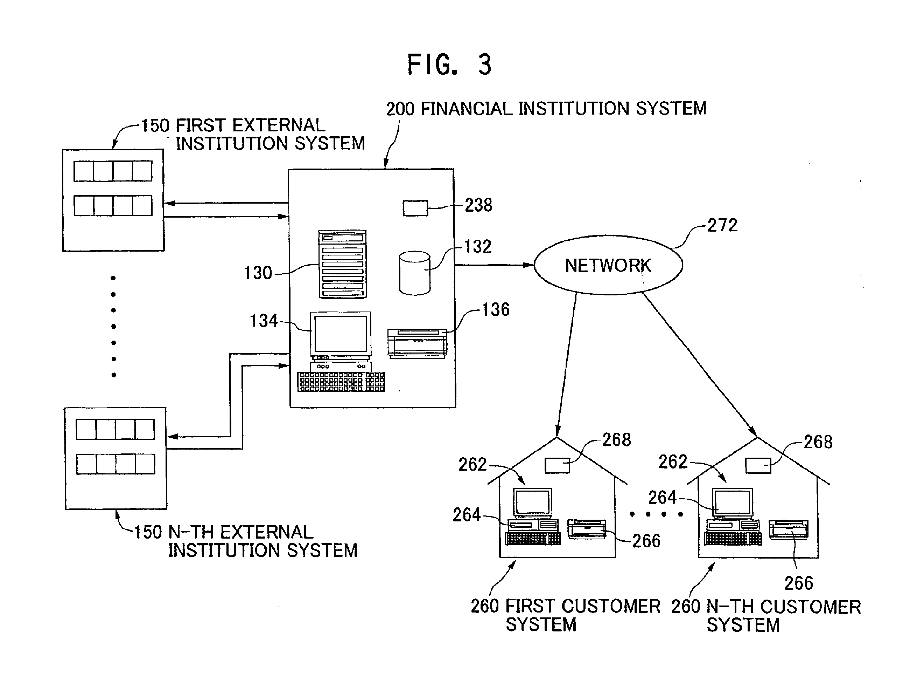

Referring now to Fig. 3, in the second embodiment of the account transaction notification system according to the present invention, a financial institution system 200 comprises a computer 130, a storage unit 132, a terminal unit 134, an output unit 136 and a terminal adapter 238 (in case of ISDN, or a modem in case of telephone line) connected to the computer 130. Information about a transaction is transmitted by e-mail. That is, the information about the transaction is transmitted to a customer system 260 by e-mail via a network 272 such as the Internet.

In an alternative embodiment, the system may be configured such that the e-mail is transmitted to the customer system 260 via either of a wire telephone system, a wireless telephone system, a portable telephone system, a wireless television system, a wire television system, a two-way television system, ISDN, a LAN, an optical fiber network system or the like.

A terminal device 262 of the customer system 260 comprises a personal computer 264, a printer 266 connected to the personal computer 264 and a terminal adapter 268 (in case of ISDN, or a modem in case of telephone line) connected to the personal computer 264. In the system with this configuration, a transaction information outputting means 168 comprises the personal computer 264.

With the system having the above configuration, the information about the transaction prepared by the transaction information preparing means 120 can be transmitted electronically and automatically from the transaction information transmitting means 122 to the personal computer 264 of the customer system 260 by e-mail via the network 272.

The personal computer 264 electronically receives the information about the transaction and displays the received information about the transaction on a display unit of the personal computer 264, and prints said information about the transaction by the printer 266 when needed.

In an alternative embodiment, the personal computer 264 maybe configured such that upon receiving the information about the transaction, the personal computer 264 may notify the customer of the reception of the information about the transaction by a speaker or a buzzer of the personal computer 264.

### (3) A third embodiment of the account transaction notification system according to the present invention

Now, the third embodiment of the account transaction notification system according to the present invention will be described.

The description below is mainly directed to the points where the configuration and operation of the third embodiment of the account transaction notification system according to the present invention are different from those of the first embodiment of the account transaction notification system according to the present invention. Accordingly, as to the portions not included in the description below, the corresponding descriptions in those of the first embodiment of the account transaction notification system according to the present invention, which have been mentioned above, should be referred to.

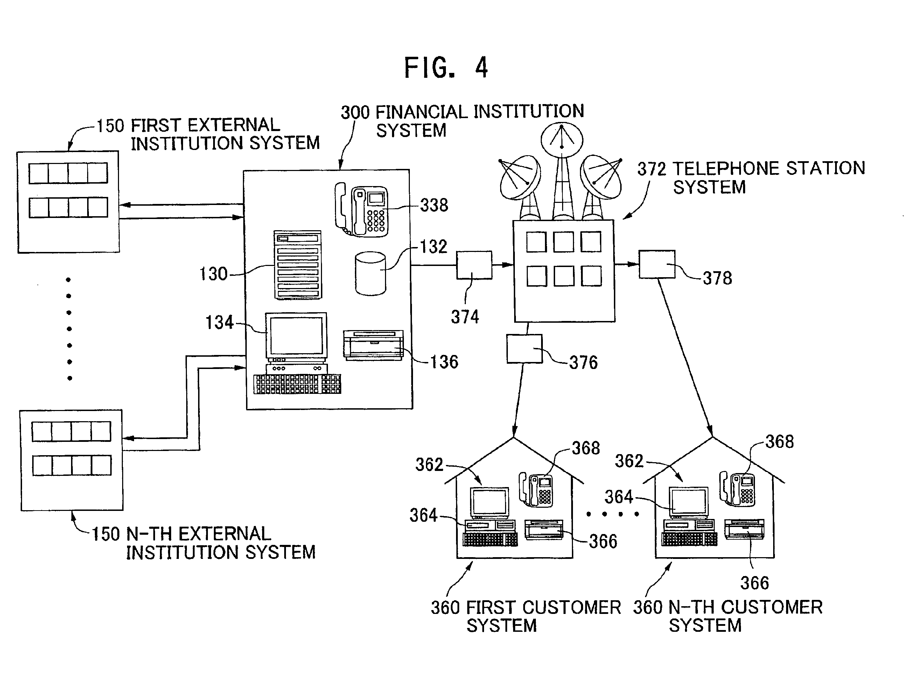

Referring now to Fig. 4, in the third embodiment of the account transaction notification system according to the present invention, a financial institution system 300 comprises a computer 130, a storage unit 132, a terminal unit 134, an output unit 136 and a telephone set 338. That is, in the system with this configuration, a transaction information transmitting means 122 is made up of the wire telephone set or the wireless telephone set 338.

A communication system 170 includes a telephone station system 372, such as a telephone exchange unit, a relay station system 374, 376, 378, such as a telephone exchange unit, and the like.

A terminal device 362 of a customer system 360 comprises a personal computer 364, a printer 366 connected to the personal computer 364 and a telephone set 368 connected to the personal computer 364. In the system with this configuration, transaction information outputting mean 168 comprises the personal computer 364.

With the system having the above configuration, the information about the transaction prepared by the transaction information preparing means 120 can be transmitted electronically and automatically to the customer system 360 by using the telephone set 368 via the communication system 170.

The personal computer 364 electronically receives the information about the transaction and displays the received information on a display section of the personal computer 364, and prints said information about the transaction by the printer 366 when needed.

In an alternative embodiment, the personal computer 364 maybe configured such that upon receiving the information about the transaction, the personal computer 364 may notify the customer of the reception of the information about the transaction by a speaker or a buzzer.

### (4) A fourth embodiment of the account transaction notification system according to the present invention

Now, the fourth embodiment of the account transaction notification system according to the present invention will be described.

The description below is mainly directed to the points where the configuration and operation of the fourth embodiment of the account transaction notification system according to the present invention are different from those of the first embodiment of the account transaction notification system according to the present invention. Accordingly, as to the portions not included in the description below, the corresponding descriptions in those of the first embodiment of the account transaction notification system according to the present invention, which have been mentioned above, should be referred to.

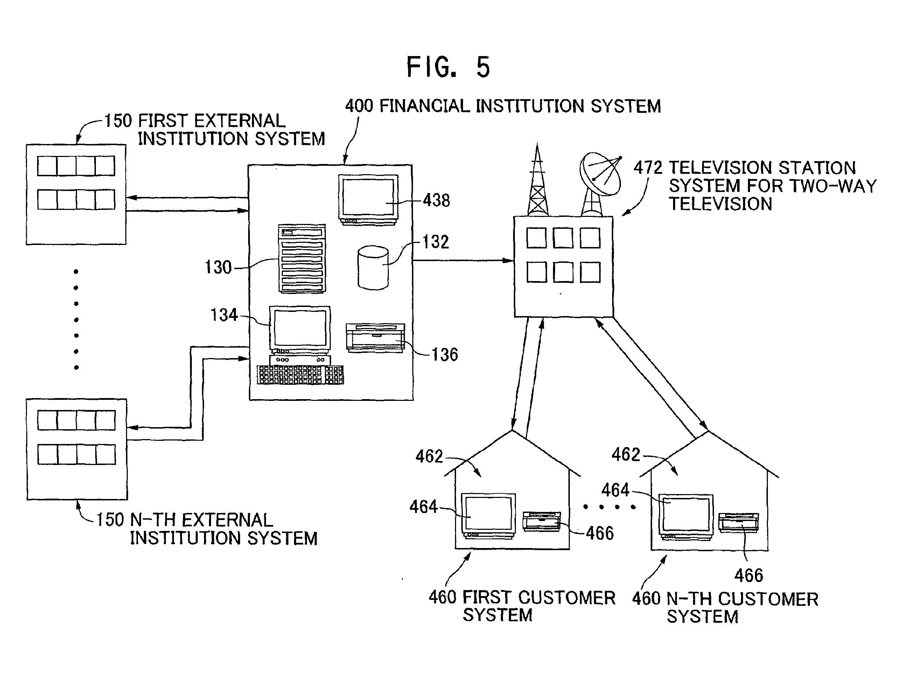

Referring now to Fig. 5, in the fourth embodiment of the account transaction notification system according to the present invention, a financial institution system 400 comprises a computer 130, a storage unit 132, a terminal unit 134, an output unit 136 and a two-way television set 438. That is, in the system with this configuration, a transaction information transmitting means 122 is made up of the two-way television set 438.

A communication system 170 includes a television station system 472 comprising a generation unit, a conversion unit, a storage unit a receiver unit, a transmitter unit and the like for a voice information, a picture information and a character information, each installed in the television station for the two-way television system.

A terminal device 462 of a customer system 460 comprises a two-way television set 464 and a printer 466 connected to the two-way television set 464. In the system with this configuration, transaction information outputting means 168 comprises the two-way television set 464.

Signals of the voice information, the picture information and the character information from the television station system 472 are transmitted to the financial institution system 400 and the customer system 460 via the LAN, ISDN, the optical fiber cable or the like. The signals of the voice information, the picture information and the character information from the customer system 460 are transmitted to the television station system 472 via the LAN, ISDN, the optical fiber cable or the like. Also the signals of the voice information, the picture information and the character information from the financial institution system 400 are transmitted to the television station system 472 via the LAN, ISDN, the optical fiber cable or the like.

With the system having the above configuration, the information about the transaction prepared by the transaction information preparing means 120 can be transmitted electronically and automatically to the customer system 460 from the transaction information transmitting means 122 via the television station system 472.

The two-way television set 464 electronically receives the information about the transaction transmitted from the transaction information transmitting means 122 via the television station system 472, and displays the received information about the transaction on a display section of the two-way television set 464, and prints said information about the transaction by the printer 466 in case of need.

In an alternative embodiment, the two-way television set 464 may be configured such that upon receiving the information about the transaction, the two-way television set 464 may notify the customer of the reception of the information about the transaction by a speaker or a buzzer.

### (5) A fifth embodiment of the account transaction notification system according to the present invention

Now, the fifth embodiment of the account transaction notification system according to the present invention will be described.

The description below is mainly directed to the points where the configuration and operation of the fifth embodiment of the account transaction notification system according to the present invention are different from those of the first embodiment of the account transaction notification system according to the present invention. Accordingly, as to the portions not included in the description below, the corresponding descriptions in those of the first embodiment of the account transaction notification system according to the present invention, which have been mentioned above, should be referred to.

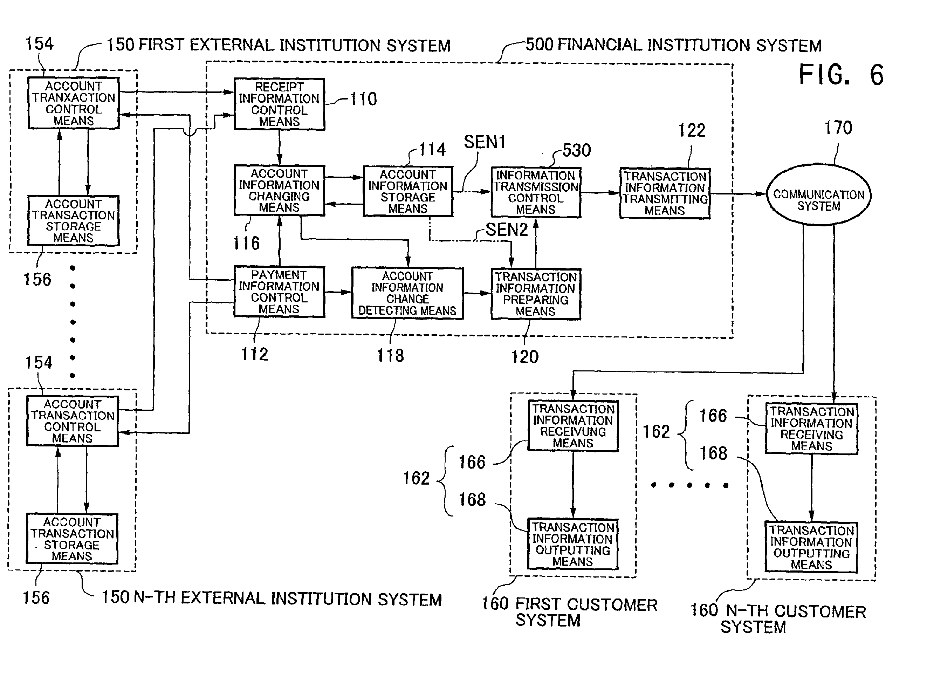

Referring now to Fig. 6, in the fifth embodiment of the account transaction notification system according to the present invention, a financial institution system 500 comprises a receipt information control means 110, a payment information control means 112, an account information storage means 114, an account information changing means 116, an account information change detecting means 118, a transaction information preparing means 120, and a transaction information transmitting means 122. The financial institution system 500 further comprise an information transmission control means 530 for controlling a transmission of information about transaction based on a threshold set for the information about transaction contents to be transmitted.

That is, the financial institution system 500 is configured such that it may set the threshold for the information about the transaction contents to be transmitted.

The information transmission control means 530 is configured such that, as shown by the chain line SEN1 in Fig. 6, it may respond to the signal output from the transaction information preparing means 120 based on the threshold set for the information about the transaction contents to be transmitted and control the transmission of the information about the transaction by using the data stored in the account information storage means 114.

Alternatively, the information transmission control means 530 may be configured such that, as shown by the two-dot chain line SEN2 in Fig. 6, the transaction information preparing means 120 prepares the information to be transmitted by using the data stored in the account information storage means 114 and then the information transmission control means 530 may control the transmission of the information about the transaction having prepared by the transaction information preparing means 120, based on the threshold set for the information about the transaction contents to be transmitted.

This threshold may include, for example, transaction type (e.g., deposit, withdrawal, or transfer or remittance of funds), a transaction amount (e.g., 10,000yen, 100,000yen, and 1,000,000yen), type of the other party of the transaction (e.g., a bank, a credit company, a cooperative society, a pension public corporation, a post office, a stock company, a tax office, a sales company, and a leasing company), or a date of the specific transaction (e.g., the 10th day, the 15th day, and the last day of the month).

For example, if the threshold is set as only "transfer and remittance" for the type of transaction, the information transmission control means 530 is configured such that it may transmit the information about the transaction only when a transfer or remittance transaction occurs.

For example, if the threshold is set as "1,000,000yen" for the transaction amount of money, the information transmission control means 530 is configured such that it may transmit the information about the transaction only when the transaction amount of money exceeds the 1,000,000yen (or only when the transaction amount of money is equal to or more than 1,000,000yen).

For example, if the threshold is set as only "bank" for the type of other party of the transaction, the information transmission control means 530 is configured such that it may transmit the information about the transaction only when the transaction with a bank occurs.

In the fifth embodiment of the account transaction notification system according to the present invention, the communication system 170 and the transaction information transmitting means 122 may employ any means having been employed in either one of the first to the fourth embodiments of the account transaction notification system according to the present invention. That is, the communication system 170 may be made up of any one of the wire telephone system, the wireless telephone system, the portable telephone system, the network system such as internet, the wireless television system, the wire television system, the two-way television system, ISDN, LAN, or optical fiber network system and the like, or an adequate combination thereof. The transaction information transmitting means 122 may be made up of any one of the portable telephone set, the wire telephone set, the wireless telephone set, other digital wireless communication unit, or the two-way television set.

Alternatively, such a configuration may be employed in which the information about the transaction prepared by the transaction information preparing means 120 is transmitted electronically and automatically from the transaction information transmitting means 122 to the customer by e-mail via the network.

With the system having the above configuration, the information about the transaction can be transmitted efficiently.

### (6) A sixth embodiment of the account transaction notification system according to the present invention

Now, the sixth embodiment of the account transaction notification system according to the present invention will be described.

The description below is mainly directed to the points where a configuration and an operation of the sixth embodiment of the account transaction notification system according to the present invention are different from those of the first embodiment of the account transaction notification system according to the present invention. Accordingly, as to the portions not included in the description below, the corresponding descriptions in those of the first embodiment of the account transaction notification system according to the present invention, which have been mentioned above, should be referred to.

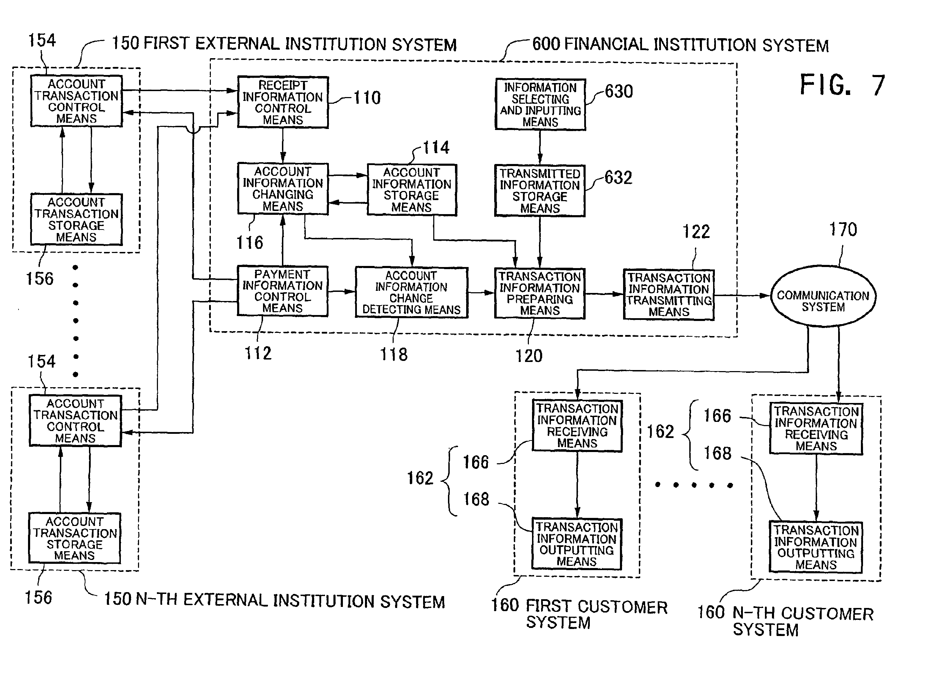

Referring now to Fig. 7, in the sixth embodiment of the account transaction notification system according to the present invention, a financial institution system 600 comprises a receipt information control means 110, a payment information control means 112, an account information storage means 114, an account information changing means 116, an account information change detecting means 118, a transaction information preparing means 120, and a transaction information transmitting means 122.

The financial institution system 600 further comprises an information selecting and inputting means 630 for selecting and inputting the information to be transmitted, and a transmitted information storage means 632 for storing the input of said information to be transmitted. In this case, the transaction information preparing means 120 is configured such that it may prepare the information to be transmitted based on the contents of input of said information to be transmitted. That is, the financial institution system 600 is configured such that it may select the information about the transaction contents to be transmitted.

This information to be transmitted may include, for example, a type of transaction (e.g., deposit, withdrawal, or transfer, or remittance of funds), a transaction amount (e.g., 10,000yen, 100,000yen, and 1,000,000yen), a type of the other party of the transaction (e.g., a bank, a credit company, a cooperative society, a pension public corporation, a post office, a stock company, a tax office, a sales company, and a leasing company) , or a date of the specific transaction (e.g., the 10th day, the 15th day, or the last day of the month).

For example, if only "transfer" is selected and inputted as the type of transaction, the transmission information preparing means 120 is configured such that it may prepare the information about the transaction only when a transfer occurs.

For example, if only "1,000,000yen" is selected and inputted for the transaction amount of money, the transmission information preparing means 120 is configured such that it may prepare the information about the transaction only when the transaction amount of money exceeds the 1,000,000yen (or only when the transaction amount of money is equal to or more than 1,000,000yen).

In the sixth embodiment of the account transaction notification system according to the present invention, the communication system 170 and the transaction information transmitting means 122 may employ any means having been employed in either one of the first to the fifth embodiments of the account transaction notification system according to the present invention.

With the system having the above configuration, the information about the transaction can be selected and transmitted to the customer efficiently.

As described above, since the present invention has provided the account transaction notification system constructed as discussed above, when a transaction which changes the account information such as deposit, withdrawal, or transfer or remittance of funds occurs, the information about the transaction contents can be transmitted electronically and automatically to the customer.

Further, the account transaction notification system according to the present invention can notify the customer of the information about the transaction contents without using a paper medium such as a bankbook, an account statement or the like.

Still further, the account transaction notification system according to the present invention can notify the customer of the detailed information about the transaction contents when a transaction which changes the account information occurs.

### PROBABILITY OF INDUSTRIAL APPLICATION OF THE INVENTION

The present invention provides an advantage that when the transaction which changes the account information such as deposit, withdrawal, or transfer or remittance of funds occurs, the information about the transaction contents can be transmitted to the customer.

Further, the present invention provides an advantage that when a transaction which changes the account information occurs, the detailed information about the transaction contents can be transmitted to the customer.

## Claims

1. A system for notifying information about a transaction in a financial account in a financial institution, said system comprising:
an account information storage means for storing information about an account balance and/or information about a transaction;
an account information changing means for changing storage contents of an account information stored in said account information storage means so as to correspond with a change in the account information caused by a transaction which changes the account information such as a deposit, withdrawal, transfer or remittance;
an account information change detecting means for detecting a change in the account information when said account information changing means operates to change the account information;
a transaction information preparing means for preparing information about an occurrence of the transaction when said account information change detecting means detects the change in the account information; and
a transaction information transmitting means for electronically and automatically transmitting said information about the occurrence of the transaction prepared by said transaction information preparing means to a terminal device for a customer.

2. A system for notifying information about a transaction in a financial account in a financial institution, said system comprising:
an account information storage means for storing information about an account balance and/or information about a transaction;
an account information changing means for changing storage contents of account information stored in said account information storage means so as to correspond with a change in the account information caused by a transaction which changes the account information such as deposit, withdrawal, transfer or remittance;
an account information change detecting means for detecting a change in the account information when said account information changing means operates to change the account information;
a transaction information preparing means for preparing information about transaction contents such as a transaction amount and balance after the transaction, when said account information change detecting means detects the change in the account information; and
a transaction information transmitting means for electronically and automatically transmitting said information about the transaction contents prepared by said transaction information preparing means to a terminal device for a customer.

3. A system in accordance with claim 1 or 2, said system further comprising:
a transaction information receiving means for electronically receiving said information about the occurrence of the transaction and/or said information about the transaction contents transmitted from said transaction information transmitting means; and
a transaction information outputting means for outputting said information about the occurrence of the transaction and/or said information about the transaction contents received by said transaction information receiving means.

4. A system in accordance with claim 3, in which said transaction information receiving means comprises a portable telephone set or other digital radio communication device.

5. A system in accordance with claim 3, in which said transaction information outputting means comprises a personal computer.

6. A system in accordance with either of claim 1 to 3, said system further comprising a transaction contents storage means for storing information about transaction contents in the past.

7. A system in accordance with either of claim 1 to 6, in which said information about the occurrence of the transaction and/or said information about the transaction contents is transmitted by e-mail.

8. A system in accordance with either of claim 1 to 6, in which said transaction information transmitting means comprises a telephone set.

9. A system in accordance with either of claim 1 to 6, in which said transaction information transmitting means comprises a television set provided with two-way communication ability.

10. A system in accordance with either of claim 1 to 9, said system further comprising an information transmission control means which can set a threshold for information about transaction contents to be transmitted and functions based on said threshold for controlling a transmission of said information about the transaction contents.

11. A system in accordance with either of claim 1 to 10, said system further comprising:
an information selecting and inputting means for allowing said transaction information transmitting means to select and input information to be transmitted; and
a transmitted information storage means for storing input of said information to be transmitted; wherein
said transaction information preparing means prepares information to be transmitted based on contents of input of said information to be transmitted.

12. A system in accordance with either of claim 1 to 11, in which said account information change detecting means detects a change in the account balance.
